# EUROPÄISCHE PATENTSCHRIFT

(11) **EP 1 762 410 B1**
(45) Veröffentlichungstag und Bekanntmachung des Hinweises auf die Patenterteilung: **01.01.2014**
(21) Anmeldenummer: 06017094.1
(22) Anmeldetag: 17.08.2006
(51) Int. Cl.: B60J 7/20

(54) **Vorrichtung zur Abdeckung einer Gestängedurchtrittsöffnung eines Cabrioletfahrzeugs und mit einer solchen Vorrichtung**
Device for covering a linkage passage opening of a convertible vehicle and a convertible vehicle with such a device
Dispositif pour couvrir une ouverture de passage de tringlerie pour véhicule décapotable et véhicule décapotable avec un tel dispositif

(30) Priorität: 09.09.2005 DE 102005043265
(43) Veröffentlichungstag der Anmeldung: 14.03.2007
(73) Patentinhaber: Valmet Automotive Oy, 23500 Uusikaupunki (FI)
(72) Erfinder: Lünnemann, Stefan, 49143 Bissendorf (DE); Markschläger, Gerd, 49082 Osnabrück (DE)
(74) Vertreter: Kronthaler, Schmidt & Coll.

(56) Entgegenhaltungen:
- EP-A1- 0 353 203
- EP-A2- 0 479 522
- DE-C- 964 378
- DE-C1- 3 903 679
- DE-C1- 4 211 918
- DE-C1- 19 637 038
- US-A- 5 010 996

## Beschreibung

Die Erfindung betrifft eine Vorrichtung zur zumindest teilweisen Abdeckung einer Öffnung zum Durchtritt von Verdeckgestänge (Gestängedurchtrittsöffnung) in einem Cabrioletfahrzeug sowie ein Cabrioletfahrzeug mit einer solchen Vorrichtung.

Abdeckungen zur vollständigen oder teilweisen Abdeckung von Gestängedurchtrittsöffnungen sind an sich bekannt. Bekannte Abdeckungen basieren im Wesentlichen darauf, dass beim Schließen des Cabrioletverdecks durch das Verdeck, insbesondere durch Gestängeelemente oder Gestängeabschnitte, die Abdeckung geöffnet und beim Öffnen des Verdecks die Abdeckung wieder geschlossen wird. Aus der DE 42 32 147 ist eine Lösung bekannt, bei der beim Schließen des Verdecks ein Gestängeelement die Abdeckung gegen die Kraft eines Federelements aus der Schließstellung in einer im Wesentlichen translatorischen Bewegung in eine Offenstellung verlagert.

Aus der DE 196 37 038 ist eine Lösung mit einer eine Schwenkbewegung ausführenden Klappe bekannt. Des Weiteren ist in der DE 196 37 038 eine Abdeckung beschrieben, die auf einem flexiblen Spannband als Abdeckmittel basiert, welches in seiner Abdeckstellung entlang der zugehörigen Gestängedurchtrittsöffnung straff aufgespannt ist, wobei zumindest ein Ende des Spannbandes an der schwenkbaren Klappe befestigt ist, die beim Hochklappen das Spannband in seine Ausweichstellung mitnimmt.

Nachteilig bei diesen bekannten Lösungen ist die vergleichsweise komplexe und damit störanfällige Mechanik, wobei die Störanfälligkeit weniger auf die absolute Komplexität der Mechanik sondern vielmehr auf die Beschränkungen, denen die beweglichen Elemente der Mechanik hinsichtlich Dimension und Gewicht, und damit Stabilität, Steifigkeit und Belastbarkeit, unterliegen, zurückzuführen ist.

Entsprechend besteht die Aufgabe der Erfindung darin, eine Vorrichtung anzugeben, die mit einer einfacheren Mechanik auskommt, bei der insbesondere die Anzahl der beweglichen Elemente reduziert oder minimiert ist.

Diese Aufgabe wird erfindungsgemäß mit den Merkmalen des Anspruchs 1 gelöst. Dazu ist eine Vorrichtung zur zumindest teilweisen Abdeckung einer Gestängedurchtrittsöffnung in einem Cabrioletfahrzeug (Abdeckvorrichtung) vorgesehen, die einen ohne Gelenke und ohne Scharniere gelagerten freistehenden Steg umfasst, der einen als Tragelement fungierenden formstabilen Teil mit einem einen flächigen Abschnitt aufweisenden verformbaren Ende aufweist. Die erfindungsgemäße Lösung kommt, unter der Voraussetzung, dass man die Verformbarkeit nicht als Beweglichkeit im Sinne einer rotatorischen oder translatorischen Bewegung auffasst, ohne bewegliche Elemente aus. Zumindest benötigt die Lösung weder Scharniere oder dergleichen um eine rotatorische Bewegung daran angelenkter Elemente noch Führungen oder dergleichen um eine translatorische Bewegung darin gelagerter Elemente zu ermöglichen. Mit seinem verformbaren Ende ist die Abdeckvorrichtung oder der Steg einer solchen Abdeckvorrichtung dazu geeignet und vorgesehen, sich an die Innenkontur des geschlossenen Cabrioletverdecks anzulegen. Eventuelle Abstandstoleranzen werden dabei insofern ausgeglichen, als die Innenseite des Cabrioletverdecks, insbesondere das Verdeckelement im Bereich der sog. C-Säule, die Abdeckvorrichtung verformt, indem das verformbare Ende in Richtung auf den Fahrzeuginnenraum heruntergedrückt, gebogen, abgeknickt und/oder gestaucht wird.

Bei der erfindungsgemäßen Lösung weist der freistehende Steg einen formstabilen Teil auf, an den sich das verformbare Ende anschließt, so dass der formstabile Teil als Tragelement fungiert und das daran anschließende verformbare Element in Bezug auf Fläche und Gewicht minimiert ist. Wenn nämlich der gesamte freistehende Steg als verformbares Element ausgeführt wäre, wäre auf Grund des Eigengewichts eine Formhaltung nur ungleich schwerer zu erreichen als mit dem formstabilen Tragelement.

Vorteilhafte Ausgestaltungen der Vorrichtung sind Gegenstand der auf Anspruch 1 rückbezogenen Unteransprüche.

Wenn das verformbare Ende an seinem Rand zumindest stückweise eine ebenfalls elastisch verformbare Abstellung, insbesondere in Form einer oder mehrerer Rippen, eines Kragens oder dergleichen, aufweist, unterstützt die Abstellung die Rückverformung des verformbaren Endes in seine unbelastete Form. Bei Belastung, also bei Verformung durch das Verdeck, ergibt sich eine Verformung auch der Abstellung, insbesondere durch Stauchung. Mit dem Ende der Belastung strebt die Abstellung wieder ihrer unbelasteten Form zu und unterstützt damit die Rückverformung des gesamten verformbaren Endes in dessen unbelastete Form.

Gemäß einer vorteilhaften, alternativen Ausführungsform ist vorgesehen, dass das verformbare Ende seine Verformbarkeit aufgrund eines elastisch verformbaren Gelenkelementes erfährt, an das sich der verformbare oder nicht verformbare flächige Abschnitt anschließt. Diese Ausführungsform führt hinsichtlich der Verformbarkeit des Endbereichs des freistehenden Steges zu gleichen Ergebnissen wie ein freistehender Steg mit komplett verformbarem Endbereich.

Wenn das elastisch verformbare Gelenkelement ein Schlauchprofil aufweist, insbesondere ein Schlauchprofil mit einer von einer elastisch verformbaren Wandung eingeschlossenen, langgestreckten Kammer, ermöglicht dieses Profil die Verformbarkeit des Endbereichs der Abdeckvorrichtung. Beim Verformen wird, im Querschnitt betrachtet, ein Abschnitt der Wandung des Gelenkelements gestaucht und ein gegenüberliegender Abschnitt der Wandung gedehnt. Die von diesen beiden Abschnitten eingeschlossene Kammer erleichtert das Stauchen und Dehnen der jeweiligen Profilabschnitte einerseits dadurch, dass kein Vollmaterial gestaucht oder gedehnt werden muss und andererseits dadurch, dass insbesondere der gestauchte Profilabschnitt in Richtung der Kammer oder in Gegenrichtung, also in Richtung auf das Innere des als Scharnier/Gelenk fungierenden Schlauchprofils oder in Gegenrichtung ausweichen kann.

Weiter bevorzugt weist das formstabile Teil auf einer im eingebauten Zustand einem schlitzförmigen Abschnitt der Gestängedurchtrittsöffnung (Gestängedurchtrittsschlitz) zugewandten Seite ein elastisches Kontaktelement, insbesondere eine elastische Lippe oder dergleichen, auf, die mit den Gestängedurchtrittsschlitz durchsetzenden Gestängeelementen zusammenwirkt, derart, dass sich das elastische Kontaktelement, also z.B. die Lippe an die Außenseite des jeweiligen Gestängeelementes anlegt und von diesem bedarfsweise zusammengedrückt, umgeklappt oder zur Seite gedrückt wird.

Die Aufgabe wird erfindungsgemäß ebenfalls, mit einem Cabrioletfahrzeug mit einem beweglichen Verdeck und einer Vorrichtung der vorangehend beschriebenen Art (Abdeckvorrichtung) gelöst, wobei Verdeck und Abdeckvorrichtung derart zusammenwirken, dass das Verdeck beim Schließen mit dem verformbaren Ende in Kontakt kommt und dieses in Richtung auf den Fahrzeuginnenraum verformt. Sobald das verformbare Ende beim Öffnen des Verdecks vom Verdeck wieder frei wird, nimmt dieses seine ursprüngliche Gestalt wieder ein und zwar aufgrund der elastischen Verformbarkeit, die ggf. noch von der elastischen Verformbarkeit ebenfalls in ihre unbelastete Form zurückstrebender, auf die Fläche und insbesondere den Rand des verformbaren Endes geeignet verteilter Abstellungen, wie z.B. ein umlaufender Kragen oder quer über die Fläche verlaufender Rippen, unterstütz wird.

Der Vorteil der Erfindung besteht darin, dass die Abdeckung keinerlei verschleißbehaftete mechanische Elemente aufweist. Zudem ist die Abdeckung einfach, z.B. durch Spritzgießen, herstellbar. Vorteilhaft ist der formstabile Teil als Hartkomponente, insbesondere auf Basis thermoplastischer Duromere, und das verformbare Ende als Weichkomponente, insbesondere auf Basis thermoplastischer Elastomere, ausgeführt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: eine Ansicht eines rückwärtigen Teils eines Cabrioletfahrzeugs mit teilweise geöffnetem Verdeck, wobei im Bereich einer Hintersitzanlage eine Abdeckvorrichtung gemäß der Erfindung vorgesehen ist,
- Fig. 2: zeigt erneut das Cabrioletfahrzeug in einer Seitenansicht, wobei das Verdeck weiter in Richtung auf eine geschlossene Position bewegt ist,
- Fig. 3: in vergrößerter Darstellung das Cabrioletfahrzeug mit teilweise geschlossenem Verdeck aus einer Blickrichtung vom Fahrzeuginnenraum gesehen hin zum rückwärtigen Teil des Fahrzeugs,
- Fig. 4: eine Schnittdarstellung der Abdeckvorrichtung und
- Fig. 5: das Cabrioletfahrzeug in einer Ansicht seitlich von oben mit geschlossenem Verdeck, wobei ein Abschnitt, in dem es zu einer Berührung des Verdecks mit der Abdeckvorrichtung, genauer einem daran angebrachten verformbarem Ende kommt, vergrößert dargestellt ist.

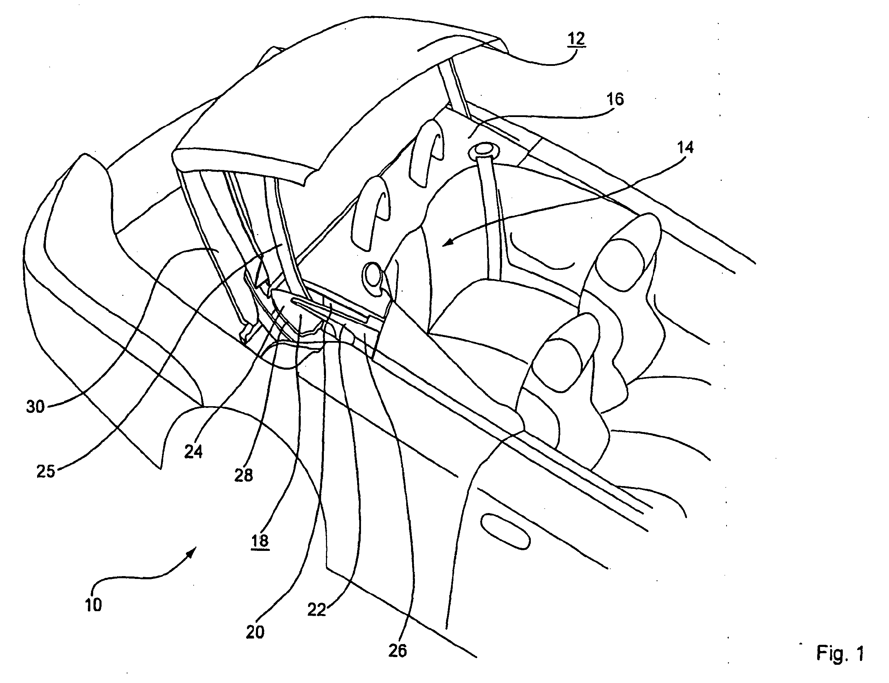

Fig. 1 zeigt eine Ansicht eines rückwärtigen Teils eines Cabrioletfahrzeugs 10 mit teilweise geöffnetem Verdeck 12. In einem rückwärtigen Abschnitt einer Hintersitzanlage 14 ist eine horizontale Abdeckung 16 gezeigt, die bei geschlossenem Verdeck 12 als Hutablage fungiert. Anschließend an diese Abdeckung 16 ist als Vorrichtung zur zumindest teilweisen Abdeckung (Abdeckvorrichtung 18) einer Gestängedurchtrittsöffnung, von der bei angebrachter Abdeckvorrichtung 18 in Richtung der horizontalen Abdeckung 16 im wesentlichen nur noch ein Gestängedurchtrittsschlitz 20 verbleibt, ein freistehender Steg 22 mit einem verformbaren Ende 24 vorgesehen. Der freistehende Steg 22 schließt mit der Abdeckung 16 als schlitzförmigen Abschnitt der Gestängedurchtrittsöffnung den Gestängedurchtrittsschlitz 20 ein, wobei in Fig. 1 eine Situation gezeigt ist, bei der ein Gestängeelement 25 teilweise in den Gestängedurchtrittsschlitz 20 eintritt.

Der freistehende Steg 22 weist einen als Tragelement fungierenden formstabilen Teil 26 auf, an den sich das verformbare Ende 24 anschließt. In Fig. 1 ist eine Ausführungsform dargestellt, bei der das verformbare Ende 24 ein flächiger Abschnitt ist, der insgesamt verformbar ist, also z.B. aus einem weichelastischen Material gefertigt ist. Das verformbare Ende 24 weist als Beispiel für zusätzliche Elemente, die die Rückverformung des verformbaren Endes 24 in seine unbelastete Gestalt unterstützen, an seinem Rand zumindest stückweise eine Abstellung 28 auf. Diese Abstellung 28 ist selbst elastisch verformbar und unterstützt in unbelastetem Zustand die Rückkehr des verformbaren Endes 24 in seine unbelastete Gestalt/Form.

Das verformbare Ende 24 ist dazu vorgesehen, bei Berührung mit einem Segment des Verdecks 12, z.B. einem als Schalenelement 30 ausgebildeten C-Säulen-Abschnitt, durch dieses verformt zu werden, so dass das verformbare Ende 24 gleich einer Dichtung an einer Innenseite des Schalenelements 30 anliegt. Man erkennt, dass der untere Teil dieses Schalenelements 30 beim Schließen des Verdecks 12 das verformbare Ende 24 der Abdeckvorrichtung 18 berührt und bei Fortschreiten der Schließbewegung verformt und zwar durch Verbiegen, Abknicken oder dergleichen in Richtung auf den Fahrzeuginnenraum.

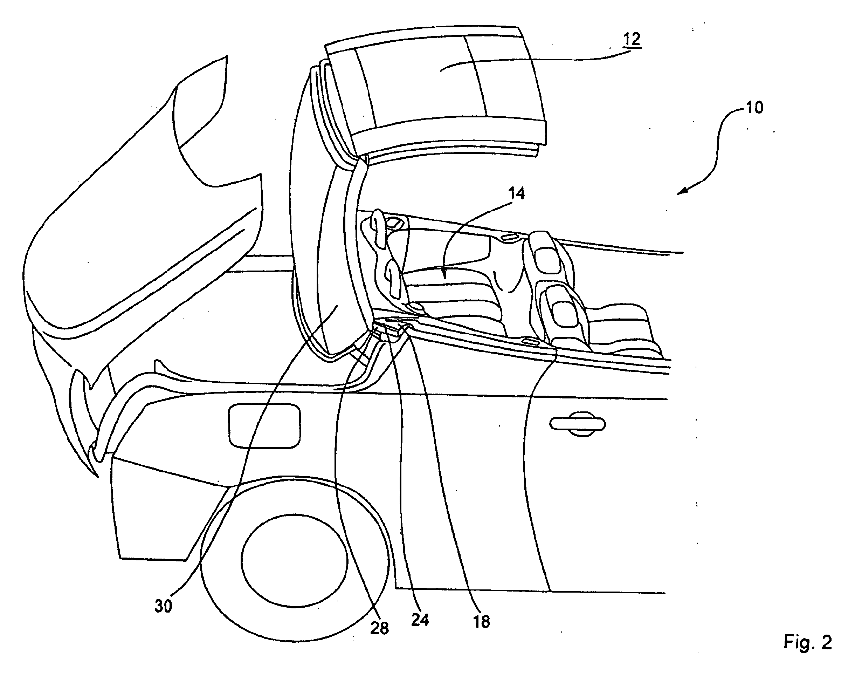

Fig. 2 zeigt das Cabrioletfahrzeug 10 ebenfalls in einer Seitenansicht, wobei das Verdeck 12 weiter in Richtung auf eine geschlossene Position bewegt ist. Man erkennt, dass das Schalenelement 30 die Abdeckvorrichtung 18 mit weiter fortschreitender Bewegung in Richtung auf eine geschlossene Position zunehmend verdeckt. Eine Innenseite des Schalenelements 30 kommt dabei spätestens bei vollständig geschlossenem Verdeck 12 mit der Abdeckvorrichtung 18, insbesondere mit deren verformbaren Ende 24 in Berührung.

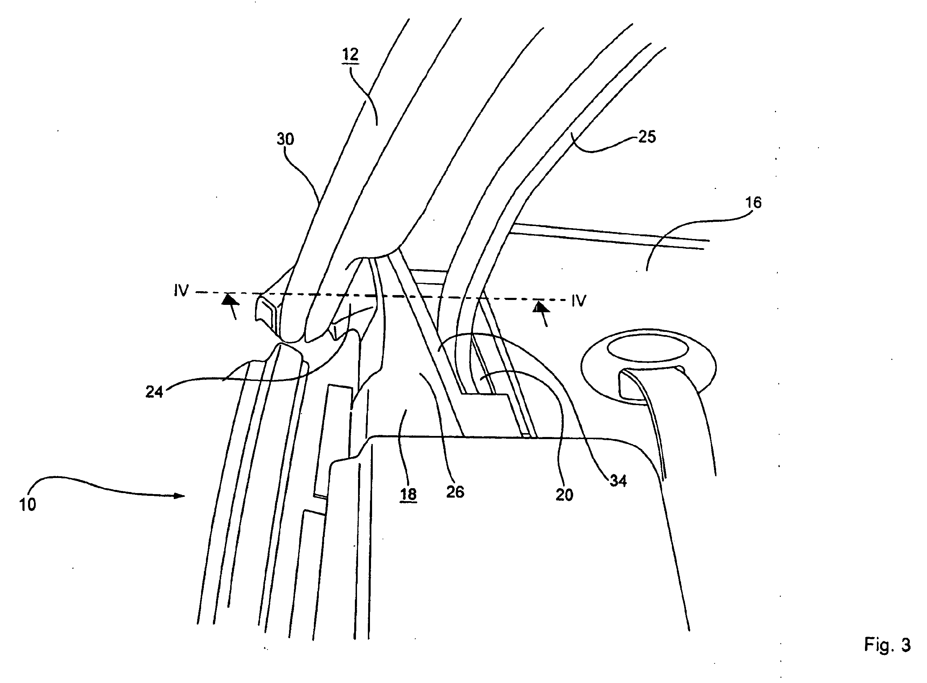

Fig. 3 zeigt in vergrößerter Darstellung das Cabrioletfahrzeug 10 mit teilweise geschlossenem Verdeck 12 aus einer Blickrichtung vom Fahrzeuginnenraum gesehen hin zum rückwärtigen Teil des Fahrzeugs.

Man erkennt die Abdeckvorrichtung 18 mit ihrem verformbaren Ende 24 und die Innenseite des Schalenelements 30, die beim Schließen des Verdecks 12 das verformbare Ende 24 der Abdeckvorrichtung 18 verformt, indem das verformbare Ende 24 von der Innenfläche des Schalenelements 30 herunter gedrückt wird.

In Fig. 3 erkennt man des Weiteren, dass der formstabile Teil 26 der Abdeckvorrichtung 18 auf seiner dem Gestängedurchtrittsschlitz 20 zugewandten Seite als elastisches Kontaktelement eine elastische Lippe 34 aufweist. Diese Lippe 34 wird beim Schließen des Verdecks 12 von einem den Gestängedurchtrittsschlitz 20 durchsetzenden Gestängeelement 25 zur Seite oder nach unten gedrückt. Die Lippe 34 fungiert also ebenfalls als verformbare Element der Abdeckvorrichtung und schützt den formstabilen Teil 26 des freistehenden Stegs 22 einerseits sowie das mit der Lippe 34 in Berührung kommenden Gestängeelement 25 andererseits gegen mechanische Beschädigungen, wie z.B. Lackabrieb.

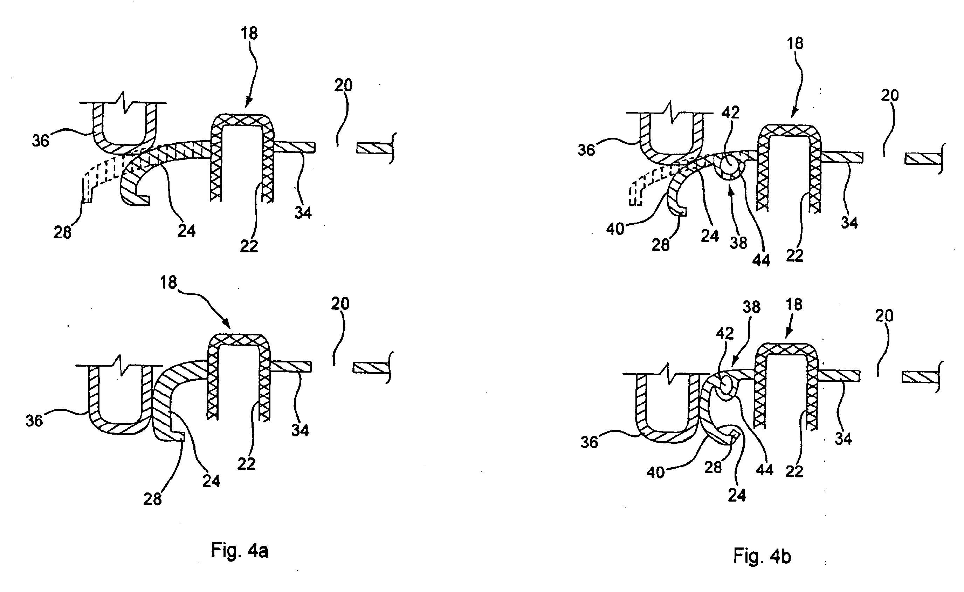

Fig. 4 zeigt eine Schnittdarstellung der Abdeckvorrichtung 18 entlang der Schnittlinie IV-IV in Fig. 3. In der Darstellung in Fig. 4a ist dabei eine erste Ausführungsform des verformbaren Endes 24 gezeigt. In der Darstellung in Fig. 4b ist eine alternative Ausführungsform des verformbaren Endes 24 gezeigt.

In allen Darstellungen in Fig. 4 (Fig. 4a, Fig. 4b) erkennt man den freistehenden Steg 22, der als formstabiler Teil der Abdeckvorrichtung 18 hier in einer Ausführung als U-Profil gezeigt ist. Seitlich an den freistehenden Steg 22 schließt sich in Richtung auf den Gestängedurchtrittsschlitz 20 die Lippe 34 an. Auf der der Lippe 34 gegenüberliegenden Seite des freistehenden Stegs 22 ist bei der für Fig. 4 gewählten Lage der Schnittlinie IV-IV bereits das verformbare Ende 24 der Abdeckvorrichtung 18 erkennbar. Oberhalb des verformbaren Endes 24 ist eine an dem Schalenelement 30 des Verdecks 12 angebrachte Dichtung 36 gezeigt.

In den beiden Darstellungen in Fig. 4a und Fig. 4b zeigt die obere Darstellung jeweils eine Situation bei beinahe geschlossenem Verdeck 12 und die zugehörige untere Darstellung eine Situation bei geschlossenem Verdeck 12. Man erkennt, dass beim Schließen des Verdecks 12 dieses, genauer eine auf der Innenseite eines Schalenelements 30 des Verdecks 12 angebrachte Dichtung 36, mit dem verformbaren Ende 24 der Abdeckvorrichtung 18 in Kontakt kommt und dieses mit weiter fortschreitender Schließbewegung verformt, indem das verformbare Ende 24 "abgeknickt" wird.

Die elastische Verformbarkeit des verformbaren Endes 24 ergibt sich entweder aufgrund geeignet gewählter Materialeigenschaften oder aufgrund eines elastisch verformbaren Gelenkelements 38, an das sich ein verformbarer oder nicht verformbarer flächiger Abschnitt 40 anschließt. Als Gelenkelement 38 kommt dabei insbesondere ein in das verformbare Ende 24 eingeformtes Schlauchprofil in Betracht, das eine langgestreckte Kammer 42 aufweist, die in einer elastisch verformbaren Wandung 44 gebildet ist. Beim Verschwenken des verformbaren Endes 24 durch das Verdeck 12 wird ein Teil der Wandung 44 gestaucht und ein anderer Teil der Wandung 44 gedehnt, so dass das Schlauchprofil seine Funktion als Gelenkelement 38 wahrnehmen kann.

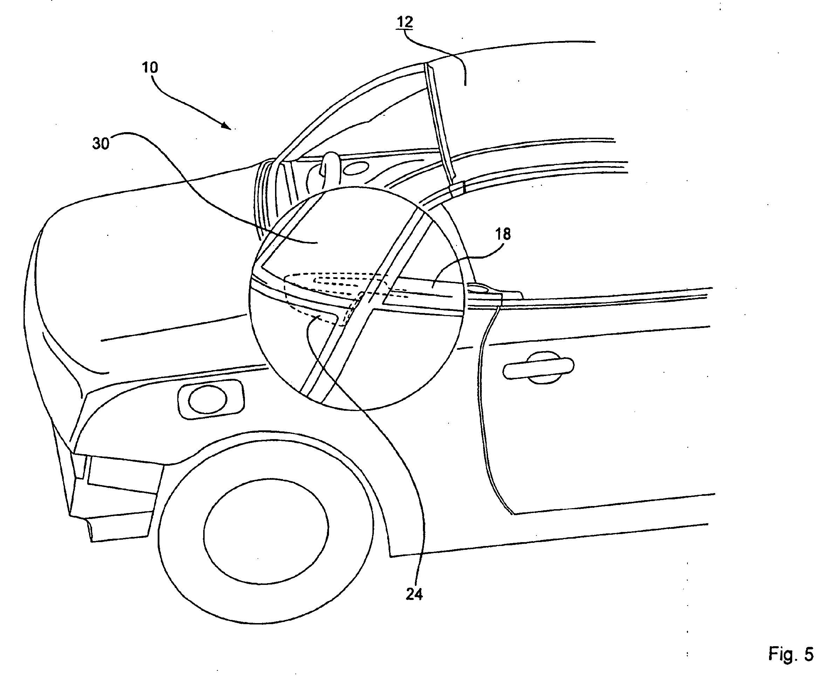

Fig. 5 zeigt das Cabrioletfahrzeug in einer Ansicht seitlich von oben mit geschlossenem Verdeck 12, wobei der Abschnitt, in dem es zu einer Berührung des Schalenelements 30 mit der Abdeckvorrichtung 18, genauer, deren verformbarem Ende 24 kommt, vergrößert dargestellt ist. Die Abdeckvorrichtung 18 ist zusammen mit dem verformbaren Ende 24 dabei gestrichelt dargestellt, weil beide Teile bei geschlossenem Verdeck 12 von diesem vollständig verdeckt und bei einem Blickwinkel von außerhalb des Fahrzeugs entsprechend nicht sichtbar sind. Die Darstellung in Fig. 5 ist dabei auch bestrebt anzudeuten, dass das verformbare Ende 24 durch den Kontakt mit dem Schalenelement 30 verformt wird.

Damit lässt sich die Erfindung kurz wie folgt darstellen:

Es wird eine Vorrichtung zur zumindest teilweisen Abdeckung einer Gestängedurchtrittsöffnung in einem Cabrioletfahrzeug (Abdeckvorrichtung 18) angegeben, bei der ein freistehender Steg 22 in ein verformbares Ende 24 ausläuft, das beim Schließen des Verdecks 12 von Verdeck- und/oder Gestängeelementen 25, 30 verformt wird, indem es z.B. zur Seite oder nach unten gedrückt wird und das beim Öffnen des Verdecks 12, also bei Rückkehr des unbelasteten Zustands wieder in seine ursprüngliche Form und/oder Orientierung zurückkehrt.

### BEZUGSZEICHENLISTE

- 10: Cabrioletfahrzeug
- 12: Verdeck
- 14: Hintersitzanlage
- 16: Abdeckung
- 18: Abdeckvorrichtung
- 20: Gestängedurchtrittsschlitz
- 22: freistehender Steg
- 24: verformbares Ende (der Abdeckvorrichtung)
- 25: Gestängeelement
- 26: formstabiles Teil (der Abdeckvorrichtung)
- 28: Abstellung
- 30: Schalenelement (des Verdecks)
- 34: elastische Lippe
- 36: Dichtung
- 38: Gelenkelement
- 40: flächiger Abschnitt
- 42: langgestreckte Kammer
- 44: Wandung

## Patentansprüche

1. Vorrichtung zur zumindest teilweisen Abdeckung einer Gestängedurchtrittsöffnung in einem Cabrioletfahrzeug (10) mit einem ohne Gelenke und ohne Scharniere gelagerten, freistehenden Steg (22), welcher einen als Tragelement fungierenden formstabilen Teil (26) mit einem einen flächigen Abschnitt (40) aufweisenden verformbaren Ende (24) aufweist.

2. Vorrichtung nach Anspruch 1,
wobei das verformbare Ende (24) an seinem Rand zumindest stückweise eine Abstellung (28) aufweist.

3. Vorrichtung nach Anspruch 1,
wobei das verformbare Ende (24) ein elastisch verformbares Gelenkelement (38) umfasst, an das sich der verformbare oder nicht verformbare flächige Abschnitt (40) anschließt.

4. Vorrichtung nach Anspruch 3,
wobei das Gelenkelement (38) ein Schlauchprofil aufweist.

5. Vorrichtung nach Anspruch 4,
wobei das Gelenkelement (38) eine langgestreckte Kammer (42) mit einer elastisch verformbaren Wandung (44) aufweist.

6. Vorrichtung nach einem der Ansprüche 1 bis 5,
wobei das formstabile Teil (26) auf einer im eingebauten Zustand einem schlitzförmigen Abschnitt der Gestängedurchtrittsöffnung, insbesondere ein Gestängedurchtrittsschlitz (20), zugewandten Seite ein elastisches Kontaktelement, insbesondere eine elastische Lippe (34), aufweist.

7. Cabrioletfahrzeug mit einem beweglichen Verdeck (12) und einer Vorrichtung nach einem der vorangehenden Ansprüche (Abdeckvorrichtung 18), wobei Verdeck (12) und Abdeckvorrichtung (18) derart zusammenwirken, dass das Verdeck (12) mit einem Gestängeelement (25) beim Schließen mit dem verformbaren Ende (24) des Stegs (22) in Kontakt kommt und das verformbare Ende (24) des Stegs (22) in Richtung auf den Fahrzeuginnenraum verformt.

8. Cabrioletfahrzeug nach Anspruch 7, wobei beim Öffnen des Verdecks (12), sobald das verformbare Ende (24) vom Verdeck (12) wieder frei wird, dieses seine ursprüngliche Gestalt wieder einnimmt.

## Claims

1. A device for covering at least part of a linkage passage opening in a convertible vehicle (10) with a self-supporting web (22), supported without joints and without hinges, said web (22) comprising a dimensionally stable part (26), acting as a support element, with a deformable end (24) comprising a planar portion (40).

2. The device according to claim 1, wherein the deformable end (24) comprises a deformable element (28) at least over part of its edge.

3. The device according to claim 1, wherein the deformable end (24) comprises an elastically deformable joint element (38) which is adjoined by the deformable or non-deformable planar portion (40).

4. The device according to claim 3, wherein the joint element (38) comprises a flexible tube profile.

5. The device according to claim 4, wherein the joint element (38) comprises an elongate chamber (42) with an elastically deformable wall (44).

6. The device according to any one of claims 1 to 5, wherein the dimensionally stable part (26) comprises an elastic contact element, in particular an elastic lip (34), on a side which, in the installed condition, faces a slot-shaped portion of the linkage passage opening, in particular a linkage passage slot (20).

7. A convertible vehicle comprising a movable hood (12) and a device according to any one of the preceding claims (covering device 18), wherein the hood (12) and the covering device (18) cooperate such that a linkage element (25) of the hood (12) contacts the deformable end (24) of the web (22) during closing and the deformable end (24) of the web (22) deforms towards the interior of the vehicle.

8. The convertible vehicle according to claim 7, wherein during opening of the hood (12), the deformable end (24) assumes its initial shape again as soon as it is released from the hood (12).

## Revendications

1. Dispositif destiné à couvrir au moins partiellement une ouverture de passage de tringlerie dans un véhicule cabriolet (10) avec une entretoise autoportante (22), supportée sans articulations et sans charnières, ladite entretoise (22) comprenant une partie de forme stable (26) qui sert d'élément de support et présente une extrémité déformable (24) avec une partie plane (40).

2. Dispositif selon la revendication 1, dans lequel l'extrémité déformable (24) comprend, au moins sur une partie de son bord, un élément déformable (28).

3. Dispositif selon la revendication 1, dans lequel l'extrémité déformable (24) comprend un élément d'articulation (38) élastiquement déformable, auquel est contiguë ladite partie plane (40), déformable ou non.

4. Dispositif selon la revendication 3, dans lequel l'élément d'articulation (38) comprend un profile tubulaire.

5. Dispositif selon la revendication 4, dans lequel l'élément d'articulation (38) comprend une chambre allongée (42) avec une paroi élastiquement déformable (44).

6. Dispositif selon l'une quelconque des revendications 1 à 5, dans lequel la partie de forme stable (26) comprend un élément de contact élastique, notamment une lèvre élastique (34), sur une face, en état installé, est tournée vers une partie sous forme de fente de l'ouverture de passage de tringlerie, notamment une fente de passage de tringlerie (20).

7. Véhicule cabriolet, comprenant une capote déplaçable (12) et un dispositif selon l'une quelconque des revendications précédentes (dispositif de couverture 18), dans lequel la capote (12) et le dispositif de couverture (18) coopèrent de manière à ce qu'un élément de tringlerie (25) de la capote (12) vienne en contact avec l'extrémité déformable (24) de l'entretoise (22) lors de la fermeture et l'extrémité déformable (24) de l'entretoise (22) se déforme vers l'intérieur du véhicule.

8. Véhicule cabriolet selon la revendication 7, dans lequel, lors de l'ouverture de la capote (12), l'extrémité déformable (24) reprend sa forme initiale dès son détachement de la capote (12).
